(19) Europäisches Patentamt
European Patent Office
Office européen des brevets

(11) **EP 3 083 841 B1**

(12) **EUROPÄISCHE PATENTSCHRIFT**

(45) Veröffentlichungstag und Bekanntmachung des Hinweises auf die Patenterteilung:
**07.02.2018 Patentblatt 2018/06**

(21) Anmeldenummer: **14809422.0**

(22) Anmeldetag: **10.12.2014**

(51) Int Cl.:
*C09C 3/12* (2006.01)    *C09C 1/30* (2006.01)
*C08K 9/06* (2006.01)    *C09D 7/12* (0000.00)
*C09J 11/04* (2006.01)    *G03G 9/097* (2006.01)
*C09D 5/03* (2006.01)

(86) Internationale Anmeldenummer:
**PCT/EP2014/077208**

(87) Internationale Veröffentlichungsnummer:
**WO 2015/091153 (25.06.2015 Gazette 2015/25)**

(54) **MODIFIZIERUNG DER OBERFLÄCHEN VON METALLOXIDEN MITTELS KETTENARTIGER STRUKTUREN**

MODIFYING THE SURFACES OF METAL OXIDES BY MEANS OF CHAIN-LIKE STRUCTURES

MODIFICATION DES SURFACES D'OXYDES MÉTALLIQUES AU MOYEN DE STRUCTURES DE TYPE CHAÎNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2013 DE 102013226494**

(43) Veröffentlichungstag der Anmeldung:
**26.10.2016 Patentblatt 2016/43**

(73) Patentinhaber: **Wacker Chemie AG**
**81737 München (DE)**

(72) Erfinder:
• **SCHNEIDER, Achim**
**84489 Burghausen (DE)**

• **GOTTSCHALK-GAUDIG, Torsten**
**84561 Mehring (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
EP-A1- 1 304 361    WO-A1-2013/024137
DE-A1-102004 055 585    US-A- 5 013 585

**EP 3 083 841 B1**

**Beschreibung**

Die Erfindung betrifft oberflächenmodifizierte nanostrukturierte Metalloxide, die im Einsatz als verstärkende Füllstoffe oder als rheologische Additive zum Einstellen der Viskosität, Fließgrenze und der scherverdünnenden sowie thixotropen Eigenschaften in Beschichtungsstoffen wie beispielsweise Farben und Lacken aber auch Kleb-, Dicht- und Kunststoffen Verwendung finden können.

Organofunktionelle partikuläre Metalloxide werden gemeinhin als aktive Füllstoffe zur Verbesserung der mechanischen Eigenschaften von Materialien verwendet, die vielfältigen Einsatz finden. So können hierdurch beispielsweise die Kratzfestigkeit von Beschichtungen wie Farben und Lacken verbessert oder die mechanischen Eigenschaften von Kleb- und Dichtstoffen oder Kunststoffen wie beispielsweise Silikonelastomeren gezielt variiert werden. Darüber hinaus erfüllen die nanostrukturierten Füllstoffe aber auch bereits im unvernetzten Zustand der Matrix-Systeme eine überaus bedeutende Aufgabe. So weisen die Dispersionen im Allgemeinen höhere Viskositäten und in vielen Fällen sogar viskoelastische Eigenschaften auf. Dieses pseudoplastische Verhalten spielt vor allem für den Verarbeitungsprozess der entsprechenden Materialien eine entscheidende Rolle. Durch Modifizierung der Oberfläche der partikulären Füllstoffe können die Wechselwirkungen mit der sie umgebenden Matrix und somit das viskoelastische Verhalten der Dispersion gesteuert werden.

Für die Oberflächenmodifizierung kommen häufig Verbindungen zum Einsatz, die unter geeigneten Prozessbedingungen chemisch angebundene, oligomere Dimethylsiloxaneinheiten bilden. Wie in der Patentschrift DE 1 163 784 beschrieben wird, können diese Einheiten aus zur Kondensation befähigten Dimethylsiloxy-Einheiten aufgebaut werden.

Oft werden zur Hydrophobierung aber auch cyclische (DE 1 916 360) oder lineare (EP 0 686 676) Oligo- bzw. Polydimethylsiloxane eingesetzt. In den hierbei angewandten Herstellprozessen ist üblicherweise ein Prozessschritt beinhaltet, bei dem drastische Temperaturen von deutlich über 250 °C vorherrschen. Auf diese Weise kann eine vergleichsweise gleichmäßige Modifizierung der Oberfläche erreicht werden. Es ist aber gemeinhin auch bekannt, dass Polydimethylsiloxane unter diesen Temperaturen Depolymerisierungsreaktionen eingehen, weshalb die erhaltenen Produkte durch vergleichsweise kurze Dimethylsiloxan-Ketten gekennzeichnet sind. Aus US 5 013 585 A, WO 2013/024137 A1, DE 10 2004 055585 A1 und EP 1 304 361 A1 sind weitere hydrophobierte Kieselsäuren bekannt. Nicht zuletzt aus Kosteneffizienzgründen ist bei der Verwendung als rheologisches Additiv im Allgemeinen eine möglichst hohe Verdickungswirkung des Metalloxids gewünscht. Beim Einsatz in polaren organischen Systemen wie z.B. in Epoxid- oder ungesättigten Polyesterharzen korreliert die Verdickungswirkung der erhaltenen Produkte weitestgehend mit dem Beleggrad. So wird beispielsweise in den Schriften DE 1 916 360 und EP 0 686 676 auf die Bedeutung des hohen Hydrophobiergrades und somit geringen Restgehalts an Silanolgruppen auf der Oxidoberfläche hingewiesen. Die zunehmende Unverträglichkeit des Metalloxids mit der polaren Zielmatrix führt allerdings zumeist auch zu signifikant erhöhten Einarbeitungszeiten und/oder einer schlechteren Dispergierung des Füllstoffs in der Matrix. Darüber hinaus ist die Oberflächenmodifizierung aller in den zuvor genannten Schriften beschriebenen Dimethylsiloxyfunktionellen Metalloxide unter alkalischen Bedingungen nicht ausreichend stabil. Laborversuche zur Lagerstabilität von Dispersionen der Metalloxide in Amingruppenreichen Matrizes zeigen meist eine signifikante Veränderung des pseudoplastischen Verhaltens über einige Stunden bzw. Tage.

So zeigen die bislang verfügbaren Dimethylsiloxan-modifizierten Kieselsäuren beispielsweise im Einsatz als Verdickungsmittel eines typischen Aminhärters eines zwei-komponentigen Epoxyklebstoffes keinen deutlichen technischen Vorteil im Vergleich zu einer nicht modifizierten, hydrophilen Kieselsäure. So ist beispielsweise die Viskosität und verdickende Wirkung von HDK® H18 geringfügig höher im Vergleich zu HDK® N20, was allerdings nicht zu einer verbreiteteren Anwendung von HDK® H18 geführt hat, da die Kosten dieser Kieselsäure signifikant höher sind.

Werden die aktuell verfügbaren Dimethylsiloxan-modifizierten Kieselsäuren in einer typischen STPE-Dichtstoffformulierung eingesetzt, so zeigen die Massen über die Lagerzeit einen Anstieg der Viskosität und besonders stark ausgeprägte Zunahme der Schubspannung. Letzteres erweist sich für die Applikation der Massen als äußerst nachteilig, da deutlich stärkere Kräfte notwendig sind, um die Fließgrenze zu überwinden.

Die Aufgabe der vorliegenden Erfindung besteht daher darin, den gegenwärtigen Stand der Technik zu überwinden und oberflächenmodifizierte Metalloxide bereitzustellen, die sich durch eine starke Verdickungswirkung in polaren organischen Systemen auszeichnen, aber dennoch gut in diesen dispergieren lassen und mit denen sich auch in Medien, die basisch reagierende Gruppen aufweisen, lagerstabile Dispersionen herstellen lassen.

Diese Aufgabe wird durch die Bereitstellung von partikulären nanostrukturierten Metalloxiden gelöst, die Gruppen der allgemeinen Formeln $R^1R^2R^3SiO_{1/2}$ (M) und $R^4R^5Si(O_{1/2})_2$ (D) aufweisen, wobei $R^1$, $R^2$, $R^3$, $R^4$ und $R^5$ jeweils ein einwertiger Kohlenwasserstoffrest mit 1 bis 24 C-Atomen ist und $R^1$, $R^2$, $R^3$, $R^4$ und $R^5$ gleich oder verschieden sein können, wobei (a) der Rest-Silanolgehalt 30-90% beträgt oder (b) der Rest-Silanolgehalt 10-40% beträgt, und für den Kohlenstoffgehalt gilt: $\%C \geq A + B \cdot \%SiOH$, wobei $A = 9$ und $B = -0{,}15$ ist und die Werte %C, A und %SiOH in Prozent angegeben sind.

Überraschenderweise zeichnen sich die erfindungsgemäßen Metalloxide auch bei vergleichsweise hohen Rest-Silanolgehalten durch eine hohe Verdickungswirkung und ein ausgeprägtes rheologisches Profil in polaren organischen Harzen aus und lassen sich dennoch unerwartet leicht in diese einarbeiten. Im Gegensatz zum Stand der Technik lassen sich z.B. mit den erfindungsgemäßen Metalloxiden in der Epoxy-Harz-Komponente ausgezeichnete Ergebnisse erzielen, die sich an einer hohen Viskosität bei deutlich geringerer Einarbeitungszeit zeigen. Die Verwendung der erfindungsgemäßen Metalloxide hat zudem den Vorteil, dass die Lagerstabilität deutlich erhöht ist, wobei im Vergleich zum Stand der Technik insbesondere eine deutlich geringere Schubspannung nach einer Lagerzeit von ca. einem Monat erreicht wird.

Die erfindungsgemäßen Metalloxide weisen Gruppen der allgemeinen Formeln $R^1R^2R^3SiO_{1/2}$ und $R^4R^5Si(O_{1/2})_2$ auf, d.h. sie sind mit Gruppen der allgemeinen Formeln $R^1R^2R^3SiO_{1/2}$ und $R^4R^5Si(O_{1/2})_2$ modifiziert.

Die erfindungsgemäßen partikulären Metalloxide zeichnen sich durch kettige Siloxanstrukturen aus, welche eine möglichst homogene Verteilung der Kettenlängen aufweisen. Vorzugsweise sind diese Siloxanketten möglichst vollständig permanent auf der Oberfläche des Metalloxids fixiert. Des Weiteren erfolgte die chemische Anbindung der Siloxankette bevorzugt über eine einzelne Verbindungsstelle zur Oberfläche des Metalloxids.

Die erfindungsgemäßen Metalloxide können beispielhaft gewählt werden aus den Gruppen 1 bis 5, sowie 13 bis 15 des Periodensystems der Elemente, wobei anzumerken ist, dass der aus Gründen der Einfachheit verwendete Ausdruck "Metalloxid" hier ausdrücklich auch die Oxide der Halbmetalle der Gruppe 14 einschließt. Bevorzugt werden die drei- und vierwertigen Oxide der Gruppen 4, 13 und 14 eingesetzt. Im Besonderen bevorzugt wird Kieselsäure eingesetzt. Kieselsäure im Sinne der Erfindung meint Sauerstoffsäuren des Siliziums und umfasst Fällungskieselsäure und pyrogene Kieselsäure. Insbesondere bevorzugt handelt es sich bei der Kieselsäure um pyrogen hergestellte Kieselsäure.

Der Rest R, der die Reste $R^1$ bis $R^{11}$ umfasst, wird ausgewählt aus der Gruppe der gesättigten, einfach oder mehrfach ungesättigten, unverzweigten oder verzweigten Kohlenwasserstoffreste, die gegebenenfalls weitere Heteroatome und/oder funktionelle Gruppen aufweisen.

Bevorzugt handelt es sich beim Rest R um Alkyl-, Alkenyl- und Arylreste wie Methyl-, Ethyl-, Propyl-, wie n-Propyl- oder i-Propyl-, Butyl-, wie n-Butyl-, i-Butyl- oder t-Butyl, Hexyl-, wie n-Hexyl- oder i-Hexyl-, Octyl-, wie n-Octyl- oder i-Octyl-, Dodecyl-, Tetradecyl-, Hexadecyl-, Octadecyl-, Vinyl-, Allyl-, Phenyl-, o-Tolyl-, m-Tolyl-, p-Tolyl-, Xylyl-, Mesityl- oder Naphtyl-Reste.

Die Alkyl- oder Arylreste können darüber hinaus auch weitere Heteroatome oder funktionelle Gruppen aufweisen. Bevorzugt sind hierbei einwertige organische Gruppen der allgemeinen Formel $R=(CH_2)_nY$ mit n = 1 bis 24 und Y = Vinyl-, Acrylat-, Methacrylat-, Glycidoxy-, -SH, -OH, primärer Aminrest ($-NH_2$), sekundäre Aminrest (-NHR), wie N-Monomethyl-, N-Monoethyl-, N-Monopropyl-, N-Monobutyl-, N-Cyclohexyl- oder Anilinorest, tertiärer Aminrest ($-NR_2$) wie N,N-Dimethyl-, N,N-Diethyl-, N,N-Dipropyl-, N,N-Dibutyl-, N,N-Methylethyl-, N,N-Methylpropyl-, N,N-Ethylpropyl-, N,N-Methylphenyl-, Morpholino-, Pyrrolyl-, Indolyl-, Pyrazolyl-, Imidazolyl- oder Piperidylrest, quartärer Aminrest wie N,N,N-Trimethylammonium-, N,N,N-Triethylammonium- oder N,N,N-Tripropylammoniumrest, Phosphonato-, $-P(O)(OR^6)_2$ ($R^7$ ausgewählt aus einer Methyl-, Ethyl- oder Phenylgruppe), Isocyanato- und geschützte Isocyanato-Gruppe (-N(H)C(O)G, wobei die Schutzgruppe G bei thermischer Belastung abgespalten wird als H-G, mit H-G = 2-Hydroxybenzoesäuremethylester, 2-Hydroxypyridin, 1-Hydroxymethyl-1,2,4-Triazol, N,N-Diethylhydroxylamin, 2-Butanonoxim, Malonsäuredimethylester, Acetessigsäureethylester, Diisopropylamin, Benzyl-tert.-butylamin, Tert.-butylmethylamin, Tert.-Butylisopropylamin, 2-Isopropylimidazol, 3,5-Dimethylpyrazol oder ε-Caprolactam) oder Dihydro-3-yl-2,5-furandion.

Die Oberfläche des Metalloxids kann mit verschiedenen der oben genannten Gruppen modifiziert sein. Bevorzugt ist die Oberfläche des Metalloxids ausschließlich mit einer Art der oben genannten Gruppen R modifiziert.

Darüber hinaus können auch weitere siliziumorganische Gruppen der allgemeinen Formel $R^{11}Si(O_{1/2})_3$ vorhanden sein, wobei der Substituent $R^{11}$ aus den oben für R genannten Kohlenwasserstoffresten gewählt wird.

Die erfindungsgemäßen Metalloxide können spezifische Oberflächen von 1 bis 600 $m^2$/g, bevorzugt 40 bis 400 $m^2$/g und besonders bevorzugt 150 bis 270 $m^2$/g (bestimmt nach der BET Methode nach DIN 66131 und 66132) aufweisen.

Die Schüttdichten der erfindungsgemäßen Metalloxide (bestimmt nach DIN EN ISO 787-11) können im Bereich von 10 bis 200 g/l, vorzugsweise 20 bis 100 g/l, besonders bevorzugt 20 bis 60 g/l liegen.

Der Modifizierungsgrad lässt sich durch Bestimmung des Rest-Silanolgehalts analysieren. Die erfindungsgemäßen Metalloxide sind bevorzugt dadurch gekennzeichnet, dass sie einen Rest-Silanolgehalt im Bereich von 30 bis 90%, besonders bevorzugt von 45 bis 85% und insbesondere bevorzugt von 55 bis 75% aufweisen.

Der Kohlenstoffgehalt (%C, angegeben in Prozent) der erfindungsgemäßen Kieselsäuren folgt der Ungleichung %C ≥ A + B · %SiOH, wobei A = 9 und B = -0,15 ist und die Werte %C, A und %SiOH in Prozent angegeben sind. In einer besonders bevorzugten Ausführung beträgt A = 10 und B = -0,125. Insbesondere bevorzugt gilt A = 10 und B = -0,1.

In einer Ausführungsform sind die erfindungsgemäßen Metalloxide dadurch gekennzeichnet, dass sie einen Rest-Silanolgehalt im Bereich von 30 bis 90%, besonders bevorzugt von 45 bis 85% und insbesondere bevorzugt von 55 bis 75% aufweisen und für den Kohlenstoffgehalt gilt: %C ≥ A + B · %SiOH, wobei A = 9 und B = -0,15 ist und die Werte %C, A und %SiOH in Prozent angegeben sind. Somit stellte sich überraschenderweise heraus, dass bei einem relativ hohen Rest-Silanolgehalt ein relativ hoher Kohlenstoffgehalt erreicht werden kann.

In einer weiteren Ausführungsform liegt der Rest-Silanolgehalt im Bereich von 10 bis 40% und besonders bevorzugt von 20 bis 35%, wobei für den Kohlenstoffgehalt wiederum gilt: %C $\geq$ A + B · %SiOH mit A = 9 und B = -0,15 und die Werte %C, A und %SiOH in Prozent angegeben sind.

Wenn es sich beim genanntem Metalloxid um pyrogene Kieselsäure handelt, ist eine geeignete Methode zur Bestimmung des Rest-Silanolgehalts (%SiOH, angegeben in Prozent) nach der Modifizierung durch Säure-Base-Titration z.B. beschrieben in G.W. Sears et al. Analytical Chemistry 1956, 28, 1981ff.

Die erfindungsgemäßen Metalloxide zeichnen sich dadurch aus, dass die durch die Modifizierung eingeführten Gruppen fest an die Oberfläche des Metalloxids gebunden sind. Eine feste Bindung steht für eine gute chemische Anbindung und wird erfindungsgemäß durch den mit Lösungsmitteln extrahierbaren Anteil des modifizierten Metalloxids quantifiziert, der bevorzugt höchstens 10 Gew.% beträgt. Besonders bevorzugt beträgt der extrahierbare Anteil höchstens 6 Gew.%, insbesondere höchstens 4 Gew.% und im Speziellen bevorzugt höchstens 2 Gew.%. Eine geeignete Methode zur Bewertung der Bindungsfestigkeit einer Modifizierung ist die quantitative Bestimmung von extrahierbarem, d.h. nicht chemisch an der Oberfläche des Metalloxids gebundenem Silan.

Ein Lösungsmittel (auch Lösemittel oder Solvens) ist ein Stoff, der Gase, Flüssigkeiten oder Feststoffe lösen oder verdünnen kann, ohne dass es dabei zu chemischen Reaktionen zwischen gelöstem Stoff und lösendem Stoff kommt. Auch das zur Untersuchung der erfindungsmäßigen Metalloxide eingesetzte Lösungsmittel Tetrahydrofuran löst keine chemischen Bindungen der Modifizierungsmittel zur Oberfläche des Metalloxids. Die hiermit extrahierbaren Bestandteile sind also lediglich durch schwächere Wechselwirkungen wie beispielsweise Van-der-Waals-Kräfte mit dem Metalloxid verbunden.

Ein niedriger Messwert für den extrahierbaren Anteil weist auf eine bessere chemische, also festere Anbindung des Modifizierungsmittels auf der Oberfläche des Metalloxids hin.

Methanolisch/wässrige Dispersionen der erfindungsgemäßen Metalloxide weisen bevorzugt pH-Werte im Bereich von 4 bis 10,5 auf. In einer besonders bevorzugten Ausführung liegen diese im Bereich von 4 bis 7 und insbesondere bevorzugt im Bereich von 4,5 bis 5,5. In einer weiteren bevorzugten Ausführung liegen die pH-Werte bevorzugt im Bereich von 9-11 und besonders bevorzugt von 9,5-10,5.

Mittels Festkörper-Kernresonanzspektroskopie ($^{29}$Si-SP/MAS-NMR) lassen sich für die erfindungsgemäßen Metalloxide Signale für die $R^1R^2R^3SiO_{1/2}$ (M) - und die $R^4R^5Si (O_{1/2})_2$ (D) -Gruppen nachweisen. Die relativen Intensitäten dieser Signale (ermittelt durch Integration der Signale) liegen bevorzugt im Bereich D/M = 1 bis 50, besonders bevorzugt im Bereich von 3 bis 30 und insbesondere bevorzugt von 10 bis 20. In einer speziellen Ausführung zeigen die Spektren der erfindungsgemäßen Produkte ein relatives D/M-Verhältnis von 14 bis 15, was bedeutet, dass die Anzahl der D-Gruppen, die mit der beschriebenen Methode für das Metalloxid detektiert werden können, 14- bis 15-mal höher ist, als die der M-Gruppen.

Bei der $^{29}$Si-SP/MAS-NMR-Spektroskopie handelt es sich um eine quantitative Methode, d.h. die relative Intensität der detektierten Signale spiegelt das tatsächlich vorliegende Anzahlverhältnis der entsprechenden Gruppen wieder. Demgegenüber hängt die Intensität der durch das weitaus häufiger angewandte Doppelresonanzexperiment $^{29}$Si-CP/MAS-NMR detektierten Signale stark von der Mobilität der chemischen Gruppen ab. Generell kann die Aussage getroffen werden, dass Gruppen mit zunehmender Mobilität (z.B. am Ende einer längeren Kette) unter identischen Messbedingungen geringere Signalintensitäten verursachen.

Die im $^{29}$Si-CP/MAS-NMR für die erfindungsgemäßen Metalloxide erhaltenen Spektren weisen bevorzugt ein relatives D/M-Verhältnis von >3, besonders bevorzugt >10, und insbesondere bevorzugt von >100 auf. Das bedeutet, dass die Anzahl der mit der beschriebenen Methode für das Metalloxid detektierbaren M-Gruppen bevorzugt sehr gering ist. Es ist insbesondere bevorzugt, dass mit der $^{29}$Si-CP/MAS-NMRfür das Metalloxid kein Signal für M-Gruppen detektierbar ist, das sich vom methodisch bedingten Hintergrundrauschen absetzt. Das bedeutet, dass die M-Endgruppen vorzugsweise am Ende möglichst langer D-Ketten vorliegen.

Ein weiterer Gegenstand der vorliegenden Erfindung betrifft ein Verfahren zur Herstellung der erfindungsgemäßen Metalloxide, dadurch gekennzeichnet, dass die Metalloxide mit monofunktionellen Siloxanen der allgemeinen Formel $R^1R^2R^3Si(OSiR^4R^5)_mX$ behandelt werden, wobei X eine reaktive Gruppe ist; $R^1, R^2, R^3, R^4$ und $R^5$ jeweils ein einwertiger Kohlenwasserstoffrest mit 1 bis 24 C-Atomen und m = 0 bis 50 ist und $R^1, R^2, R^3, R^4$ und $R^5$ gleich oder verschieden sein können, wobei (a) die Modifizierung in Abwesenheit eines Hilfsstoffs bei einer Temperatur von 150 bis 230 °C erfolgt oder (b) die Modifizierung in Anwesenheit eines Hilfsstoffs, welcher die notwendigen Reaktionszeiten herabsetzt und/oder es ermöglicht die Prozesstemperaturen zu reduzieren, bei einer Temperatur von 80 bis 120 °C erfolgt.

Der Wert für m liegt zwischen 0 und 50. Bevorzugt liegt der Wert für m im Bereich von 5 bis 40. Aufgrund technischer Vorteile liegt m besonders bevorzugt im Bereich von 10 bis 20.

Beim Substituenten X handelt es sich um eine reaktive Gruppe wie beispielsweise Hydroxy, Halogen, Aminreste, $OR^8$, $OC(O)R^9$, $O(CH_2)_iOH$, $O(CH_2)_iOR^{10}$, wobei gilt: i=0 bis unendlich, bevorzugt i=1 bis unendlich, besonders bevorzugt i=1 bis 10 und insbesondere bevorzugt i=2. Die Reste $R^1$ bis $R^5$ sind wie oben definiert, für die Reste $R^8$-$R^{10}$ gilt die eingangs für R beschriebene Definition.

Als Modifizierungsagens werden monofunktionelle Siloxane der allgemeinen Formel $R^1R^2R^3Si(OSiR^4R^5)_mX$ eingesetzt, wobei diese allein oder in beliebigen Gemischen verwendet werden können. Bevorzugt werden zwei verschiedene Siloxane in die Modifizierzungsreaktion eingesetzt, besonders bevorzugt nur ein Siloxan.

Bevorzugt handelt es sich bei den eingesetzten Siloxanen um Oligodimethylsiloxane, d.h. die Reste $R^4$ und $R^5$ spiegeln Methylgruppen (Me) wieder. Besonders bevorzugt spiegeln zusätzlich auch die Reste $R^2$ und $R^3$ Methylgruppen wieder. In einer speziellen Ausführung der Erfindung werden Siloxane der allgemeinen Formel $Me_3Si(OSiMe_2)_kOH$ eingesetzt, wie beispielsweise in EP 1 883 666 beschrieben, wobei k die oben für i genannte Bedeutung innehat.

Die Siloxane können in beliebigen Mengen eingesetzt werden. Bevorzugt beträgt die eingesetzte Menge 5 bis 50 Gew.% und besonders bevorzugt 20 bis 40 Gew.% bezogen auf das nicht modifizierte Metalloxid. In einer speziellen Ausführung der Erfindung werden besonders bevorzugt 15 bis 25 Gew.% des monofunktionellen Siloxans bezogen auf das nicht modifizierte Metalloxid eingesetzt. In einer weiteren bevorzugten Ausführung werden 25 bis 40 Gew.% des monofunktionellen Siloxans bezogen auf das nicht modifizierte Metalloxid unter Zugabe eines Hilfsstoffs eingesetzt.

Bevorzugt wird das oberflächenmodifizierte Metalloxid mittels eines Verfahrens hergestellt, bei dem der Herstellungsprozess in getrennten Schritten erfolgt. Diese Umfassen (1) intensives Mischen des Metalloxids mit den Modifizierungsagenzien (Belegung), (2) Reaktion des Metalloxids mit dem Belegungsmittel und (3) Reinigung der Kieselsäure.

Im Sinne der Erfindung handelt es sich bei den Begriffen "Modifizierungsagens" und "Belegmittel" oder "Belegungsmittel" um Synonyme. Ebenso handelt es sich bei den Begriffen "Modifizierung" oder "Reaktion" um Synonyme, wobei der entsprechende Verfahrensschritt mit (2) bezeichnet ist.

Bevorzugt erfolgt anschließend an die Reaktion eine Reinigung der modifizierten Kieselsäure, wobei besonders bevorzugt überschüssiges Modifizierungsagens und Nebenprodukte entfernt werden.

Die Oberflächenmodifizierung (Reaktion) wird bevorzugt in einer Atmosphäre durchgeführt, die nicht zur Oxidation des oberflächenmodifizierten Metalloxids führt, d.h. bevorzugt weniger als 10 Vol.% Sauerstoff und besonders bevorzugt weniger als 2,5 Vol.% Sauerstoff enthält, beste Ergebnisse werden erzielt bei weniger als 1 Vol.% Sauerstoff.

Der Druck während der Verfahrensschritte reicht bevorzugt von schwachem Unterdruck von 0,2 bar bis zum Überdruck von 100 bar, wobei aus technischen Gründen Normaldruck, das heißt druckfreies Arbeiten gegenüber Außen-/Atmosphären-Druck besonders bevorzugt ist.

Gegebenenfalls können dem Verfahren protische Lösungsmittel hinzugefügt werden. Von einem protischen Lösungsmittel spricht man, wenn ein Molekül über eine funktionelle Gruppe verfügt, aus der Wasserstoffatome im Molekül als Protonen abgespalten werden können (Dissoziation). Aufgrund der hohen Polarität der OH-Bindung kann diese unter Abspaltung eines positiv geladenen Wasserstoffatoms, dem Proton, vergleichsweise einfach gespalten werden.

Das wichtigste protische Lösungsmittel ist Wasser, das (vereinfacht) in ein Proton und ein Hydroxid-Ion dissoziiert. Weitere protische Lösungsmittel stellen z. B. Alkohole und Carbonsäuren dar. Erfindungsgemäß können als protische Lösungsmittel beispielsweise flüssige oder verdampfbare Alkohole wie isoPropanol, Ethanol oder Methanol oder Wasser zugesetzt werden. Es können auch Gemische der oben genannten protischen Lösungsmittel zugefügt werden. Vorzugsweise werden 1 bis 50 Gew.% an protischen Lösungsmittel bezogen auf das Metalloxid zugefügt, besonders bevorzugt 5 bis 25 Gew.%. Besonders bevorzugt ist die Zugabe von Wasser als protischem Lösungsmittel.

Die erfindungsgemäße Modifizierungsreaktion erfolgt bevorzugt in einem Gasphasenprozess, d.h. das Belegmittel wird der reinen, weitestgehend trockenen (daher pulverförmigen) Kieselsäure zugefügt. Im Gegensatz dazu wird die Kieselsäure in einem Flüssigphasenprozess in flüssiger Phase vorgelegt.

Bevorzugt erfolgt die erfindungsgemäße Modifizierungsreaktion nicht in wässriger Phase.

Die Siloxane werden dem Verfahren als Modifizierungsagenzien (Belegmittel) bevorzugt in flüssiger Form zugefügt, und insbesondere bevorzugt dem pulverförmigen Metalloxid zugemischt. Die Verbindungen können dabei in reiner Form oder als Lösungen in bekannten technisch eingesetzten Lösungsmitteln beispielsweise Alkoholen wie z.B. Methanol, Ethanol oder i-Propanol, Ethern wie z.B. Diethylether, THF oder Dioxan, oder aliphatischen bzw. aromatischen Kohlenwasserstoffen wie z.B. Hexanen oder Toluol zugemischt werden. Die Konzentration in der Lösung beträgt dabei 5 bis 95 Gew.%, bevorzugt 30 bis 95 Gew.%, besonders bevorzugt 50 bis 90 Gew.%.

Zusätzlich zu den zuvor genannten monofunktionellen Siloxanen können weitere alternative Modifizierungsagenzien eingesetzt werden. Zum Einsatz können hierbei alle bekannten zur Oberflächenmodizierung eingesetzten Verbindungen bzw. gegebenenfalls auch deren Gemische kommen. Bevorzugt werden reaktive Siliziumverbindungen wie beispielsweise Silylamine, Chlor-, Hydroxy- oder Alkoxy-Silane und -Siloxane oder deren Gemische eingesetzt. In einer besonders bevorzugten Ausführung wird Hexamethyldisilazan eingesetzt. Die Modifizierung des Metalloxids mit diesen, kann vor, gleichzeitig oder auch nach der Modifizierung mit den monofunktionellen Siloxanen erfolgen. In einer bevorzugten Ausführungsform erfolgt zunächst die Modifizierung mit den monofunktionellen Siloxanen. Die Umsetzung mit den weiteren Modifizierungsagenzien wird anschließend durchgeführt.

Die Beispiele KS4 und KS6 im Vergleich zu KS3 und KS5 zeigen, dass die entsprechende Nachbehandlung nochmals eine deutliche Verbesserung der verdickenden Wirkung der Kieselsäuren hervorruft.

Zur Herstellung der erfindungsgemäßen Metalloxide können darüber hinaus Stoffe zum Einsatz kommen, welche die notwendigen Reaktionszeiten herabsetzen und/oder es ermöglichen die Prozesstemperaturen zu reduzieren. Diese katalytisch oder stöchiometrisch wirksamen Stoffe werden im Folgenden mit dem Begriff Hilfsstoffe bezeichnet. Sie umfassen vorzugsweise sauer oder basisch reagierende Stoffe. Sie können beispielsweise aus der Gruppe der Lewis-Säuren gewählt sein, die z.B. dreiwertige Aluminium- und Bor-Verbindungen umfassen. Bevorzugt werden auch Brønsted-Säuren, wie z.B. Halogenwasserstoffe oder organische Säuren eingesetzt. Besonders bevorzugt sind hierbei Chlorwasserstoff oder Essigsäure. In einer weiteren Ausführungsform werden als Hilfsstoff basisch reagierende Verbindungen eingesetzt, beispielsweise Hydroxide von Alkali- und Erdalkalimetallen sowie auch deren aus den entsprechenden Alkoholen oder Carbonsäuren abgeleiteten Salze. Des Weiteren können sie gewählt sein aus stickstoffhaltigen Verbindungen wie Ammoniak oder organisch substituierten primären, sekundären oder tertiären Aminen. Die einwertigen organischen Substituenten der genannten Alkohole, Carbonsäuren und Amine umfassen gesättigte und ungesättigte, verzweigte sowie unverzweigte Kohlenwasserstoffreste, die darüber hinaus auch weitere Heteroatome oder funktionelle Gruppen aufweisen können. Die Hilfsstoffe können in Substanz aber auch als Lösung in inerten oder reaktiven Lösemitteln zugesetzt werden. Bevorzugt werden wässrige Natron- oder Kalilauge, wässrige ammoniakalische Lösung, i-Propylamin, n-Butylamin, i-Butylamin, t-Butylamin, Cyclohexylamin, Triethylamin, Morpholin, Piperidin oder Pyridin eingesetzt.

In einer bevorzugten Ausführungsform betragen die eingesetzten Mengen des Hilfsstoffs 0,1 bis 10 Gew.% bezogen auf das unmodifizierte Metalloxid. Bevorzugt werden 0,2 bis 5 Gew.% eingesetzt. Besonders bevorzugt wird hierbei der Einsatz von 0,5 bis 1,5 Gew.% Hilfsstoff bezogen auf das unmodifizierte Metalloxid.

Die Belegung des pulverförmigen Metalloxids mit den genannten Modifizierungsagenzien geschieht vorzugsweise durch Düsentechniken oder vergleichbare Techniken. Effektive Verdüsungstechniken können beispielsweise das Verdüsen in 1-Stoffdüsen unter Druck (vorzugsweise 5 bis 20 bar), Versprühen in 2-Stoffdüsen unter Druck (vorzugsweise Gas und Flüssigkeit 2 bis 20 bar), Feinstverteilung mit Atomizern oder Gas-Feststoff-Austauschaggregaten mit beweglichen, rotierenden oder statischen Einbauten sein, die eine homogene Verteilung der Belegmittel mit dem pulverförmigen Metalloxid erlauben.

Das Aerosol kann über Düsen von oben auf den in Bewegung versetzten pulverförmigen Feststoff aufgebracht werden oder in den fluidisierten Feststoff hinein, bevorzugt ist Verdüsung von oben.
Bevorzugt werden die Belegmittel als feinstverteiltes Aerosol zugefügt, dadurch gekennzeichnet, dass das Aerosol eine Sinkgeschwindigkeit von 0,1 bis 20 cm/s aufweist. Ein Aerosol ist ein Gemisch (Dispersion) aus festen oder flüssigen Schwebeteilchen und einem Gas.

Die Zugabe der Modifizierungsagenzien und der protisch reagierenden Verbindungen und/oder Hilfsstoffe kann gleichzeitig oder zeitlich verzögert erfolgen. Bevorzugt erfolgt zuerst eine homogene Belegung des Metalloxids mit den protisch reagierenden Verbindungen und/oder Hilfsstoffe und anschließend bzw. zeitlich verzögert die Belegung mit den Belegmitteln.

Die Reaktion (Schritt 2) erfolgt bevorzugt bei Temperaturen, die eine möglichst quantitative Reaktion der funktionellen Gruppe mit der Oberfläche des Metalloxids ermöglicht, ohne hierbei das Siloxan zu zersetzen. Bevorzugt werden hierbei Temperaturen von 30 °C bis 350 °C und besonders bevorzugt von 40 °C bis 250 °C angewandt. In einer Ausführung erfolgt der Reaktionsschritt bei 150 °C bis 230 °C und in Abwesenheit eines Hilfsstoffs. In einer weiteren Ausführungsform erfolgt der Reaktionsschritt bei 80 °C bis 120 °C unter Zuhilfenahme eines Hilfsstoffs.

Der Temperaturverlauf kann während der Reaktion konstant gehalten werden oder wie in EP 1 845 136 beschrieben einen ansteigenden Gradienten aufweisen.

Die Verweilzeit der Reaktion (Schritt 2) beträgt bevorzugt 1 min bis 24 h, besonders bevorzugt 15 min bis 300 min und aus Gründen der Raumzeitausbeute insbesondere bevorzugt 15 min bis 240 min.

Belegung (1) und Reaktion (2) erfolgen vorzugsweise unter mechanischer oder Gas-getragener Fluidisierung. Während bei der mechanischen Fluidisierung das partikuläre Pulver durch Bewegung eines Körpers (beispielsweise eines Rührflügels) in der Schüttung bzw. dem Fluid in den fluiden Zustand versetzt wird, wird dies im Falle der Gas-getragenen Fluidisierung lediglich durch Einleiten eines Gases vorzugsweise von unten (z.B. in einer Wirbelschicht) erreicht. Eine Gas-getragene Fluidisierung kann durch alle inerten Gase erfolgen, die nicht mit den Modifizierungsargenzien, dem Metalloxid und dem modifizierten Metalloxid reagieren, also nicht zu Nebenreaktionen, Abbaureaktionen, Oxidationsvorgängen und Flammen- und Explosionserscheinungen führen. Vorzugsweise finden hier Stickstoff, Argon und andere Edelgase sowie Kohlenstoffdioxid Verwendung. Die Zuführung der Gase zur Fluidisierung erfolgt bevorzugt im Bereich von Leerrohrgasgeschwindigkeiten von 0,05 bis 5 cm/s und besonders bevorzugt von 0,5 bis 2,5 cm/s. Unter dem Begriff Gasleerrohrgeschwindigkeit ist der Quotient aus dem Volumenstrom des strömenden Gases, der in dem Bereich vorliegt, in dem die Schritte (1) Belegung, (2) Reaktion bzw. (3) Reinigung durchgeführt werden, und der freien Querschnittsfläche des entsprechenden durchströmten Bereichs zu verstehen. Besonders bevorzugt ist die mechanische Fluidisierung, die ohne zusätzlichen über die Inertisierung hinausgehenden Gaseinsatz, durch Flügelrührer, Ankerrührer und sonstige geeignete Rührorgane erfolgt.

Der Reinigungsschritt (3) ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, dass bevorzugt ein Mischen und ein Fluidisieren, jedoch nicht völlige Verwirbelung, eintritt.

Während des Reinigungsschritts (3) zur Abtrennung nicht reagierter Edukte sowie anfallender Nebenprodukte kann die Prozesstemperatur gegebenenfalls angehoben werden. Die Reinigung erfolgt vorzugsweise bei einer Reinigungstemperatur von 100 °C bis 350 °C, besonders bevorzugt bei 105 °C bis 180 °C und insbesondere bevorzugt von 110 °C bis 140 °C. In einer weiteren bevorzugten Ausführungsform erfolgt die Abtrennung besonders bevorzugt bei Temperaturen von180 °C bis 240 °C.

Um Oxidation zu Vermeiden und die Reinigung effektiver zu gestalten kann dieser Prozessschritt (3) auch die Zufuhr größerer Mengen eines Schutzgases, vorzugsweise Stickstoff, Argon und andere Edelgase sowie Kohlenstoffdioxid, entsprechend einer Leerrohrgasgeschwindigkeit von vorzugsweise 0,001 bis 10 cm/s, bevorzugt 0,01 bis 1 cm/s umfassen.

Belegung, Reaktion und Reinigung können als diskontinuierlicher (Batch-Prozess) oder kontinuierlicher Prozess durchgeführt werden. Aus technischen Gründen bevorzugt ist eine kontinuierliche Reaktionsführung wie sie beispielsweise in EP 1 845 136 beschrieben ist.

Zusätzlich können während der Belegung in Schritt (1) und/oder Modifizierung in Schritt (2) und/oder im Anschluss an die Reinigung kontinuierliche oder diskontinuierliche Verfahren zur mechanischen Verdichtung oder Strukturmodifizierung des Metalloxids eingesetzt werden, wie zum Beispiel Presswalzen, Mahlaggregate, wie Kollergänge oder Kugelmühlen, Verdichtung durch Schnecken oder Schraubenmischer, Schraubenverdichter, Brikettierer, oder Verdichten durch Absaugen des Luft- oder Gasinhalts durch geeignete Vakuummethoden.

Besonders bevorzugt findet die mechanische Verdichtung oder Strukturmodifizierung während Schritt (1) durch Presswalzen, Mahlaggregate wie Kugelmühlen oder Verdichtung durch Schnecken, Schraubenmischer, Schraubenverdichter und Brikettierer statt.

In einer weiteren besonders bevorzugten Verfahrensweise werden im Anschluss an die Reinigung Verfahren zur mechanischen Verdichtung des Metalloxids eingesetzt, wie Verdichten durch Absaugen des Luft- oder Gasinhaltes durch geeignete Vakuummethoden oder Presswalzen oder Kombination von beiden Verfahren.

Zusätzlich können in einer besonders bevorzugten Verfahrensweise im Anschluss an die Reinigung Verfahren zur Desagglomerierung des Metalloxids eingesetzt werden, wie Stiftmühlen, Hammermühlen, Gegenstrommühlen, Prallmühlen oder Vorrichtungen zur Mahlsichtung.

Ein weiterer Gegenstand der Erfindung ist die Verwendung der erfindungsgemäßen oberflächenmodifizierten nanostrukturierten Metalloxide oder der nach dem erfindungsgemäßen Verfahren hergestellten oberflächenmodifizierten nanostrukturierten Metalloxide zur Steuerung der Fließeigenschaften von Medien wie Kleb-, Dicht- und Beschichtungsstoffen, zur Verbesserung der mechanischen Eigenschaften von Elastomeren sowie zur Steuerung der Ladungs- und Fließeigenschaften von Pulvern wie Tonern oder Pulverlacken. Bevorzugt werden die erfindungsgemäßen Metalloxide in Klebstoffen, Dichtstoffen oder Silikonelastomeren.

Eine bevorzugte Ausführungsform ist die Verwendung der erfindungsgemäßen Kieselsäuren als Verdickungsmittel in polaren Systemen, insbesondere bevorzugt in Epoxidharzen.

Eine bevorzugte Ausführungsform ist die Verwendung der erfindungsgemäßen Kieselsäuren als Verdickungsmittel in polaren Systemen, insbesondere bevorzugt in Epoxidharzen.

Des Weiteren bevorzugt ist die Verwendung der erfindungsgemäßen Kieselsäuren zur Verbesserung der Rieselfähigkeit pulverförmiger Materialien, insbesondere bevorzugt ist der Einsatz in Tonern.

Darüber hinaus werden die erfindungsgemäßen Kieselsäuren bevorzugt als verstärkender Füllstoff eingesetzt, insbesondere bevorzugt in Silikon-Kautschuk.

**Analysemethoden:**

### 1. Bestimmung des Kohlenstoffgehalts (%C)

Die Elementaranalyse auf Kohlenstoff erfolgte nach DIN ISO 10694 unter Verwendung eines CS-530 Elementaranalysators der Firma Eltra GmbH (D-41469 Neuss).

### 2. Bestimmung des Restgehalts an nicht modifizierten Kieselsäure-Silanolgruppen

Die Bestimmung des Rest-Silanolgehalts erfolgte analog G.W. Sears et al. Analytical Chemistry 1956, 28, 1981ff mittels Säure-Base-Titration der in einer 1:1-Mischung aus Wasser und Methanol suspendierten Kieselsäure. Die Titration erfolgte im Bereich oberhalb des isoelektrischen Punktes und unterhalb des pH-Bereichs der Auflösung der Kieselsäure. Der Rest-Silanolgehalt in % kann demnach nach folgender Formel errechnet werden:

$$SiOH = SiOH(silyl)/SiOH(phil)*100\%$$

mit

>SiOH(phil): Titrationsvolumen aus der Titration der unbehandelten Kieselsäure
>SiOH(silyl): Titrationsvolumen aus der Titration der silylierten Kieselsäure

### 3. Bestimmung des extrahierbaren Anteils, d.h. des Anteils an extrahierbarem Silyliermittel

2,5 g der zu untersuchenden Kieselsäure werden in einem PE-Schraubdeckelgefäß mit einem Spatel in 47,5 g Tetrahydrofuran eingerührt und das Gefäß anschließend verschlossen. Nach 30 min Ruhezeit im Eisbad wird die Mischung für 30 min im Ultraschallbad unter Eiskühlung behandelt (Sonorex Digitec *DT 156,* BANDELIN electronic GmbH & Co. KG, D-12207 Berlin) und anschließend durch Druckfiltration (5 bar Stickstoff) über einen PTFE-Membranfilter (Porengröße: 0,2 $\mu$m, Durchmesser: 47 mm, Sartorius AG, Göttingen) das klare Filtrat erhalten. Hiervon werden exakt 10,00 ml als Analysat zur Bestimmung des Siliziumgehalts mittels Atomabsorptionsspektroskopie (Atom Absorption Spectrometer 2100, Perkin Elmer Waltham, MA, USA) abgenommen und gewogen.

Die extrahierbaren Bestandteile in Gew.% können in erster Näherung wie folgt berechnet werden:

$$Extrahierbare\ Bestandteile = 10^{-4} \times \frac{m(THF) \times V(\text{Analysat})}{m(\text{Metalloxid}) \times M(\text{Si})} \times \frac{c(\text{Analysat}) \times M(R^4R^5SiO_{2/2})}{m(\text{Analysat})}$$

mit

>$m$(THF): Einwaage Tetrahydrofuran (= 47,50 g)
>$V$(Analysat): Volumen des Analysats (= 10,00 ml)
>$m$(Metalloxid): Einwaage des Oberflächenmodifizierten
>Metalloxids (= 2,50 g)
>$M$(Si): Molare Masse Silizium (=28,09 g/mol)
>$c$(Analysat): Siliziumgehalt des Analysats in mg/l
>$m$(Analysat): Auswaage des Analysats in g
>$M(R^4R^5SiO_{2/2})$: molekulare Masse der D-Gruppen $R^4R^5SiO_{2/2}$ in g/mol

### 4. NMR-spektroskopische Charakterisierung

Ausgewählte Proben wurden mittels $^{29}$Si-SP/MAS-Festkörper-NMR-Spektroskopie untersucht. MAS (Magic-Angle-Spinning) ist eine Technik zur Verbesserung der Signalqualität in der Festkörper-Kernspinresonanzspektroskopie (NMR-Spektroskopie), die auf der sehr schnellen Rotation der Probe während der Messung beruht. SP steht für single pulse. Verwendet wurde das NMR-Spektrometer AVANCE 400 WB der Firma Bruker (Bruker Corporation, Billerica, MA, USA) ausgestattet mit einem 7 mm MAS-Probenkopf (Resonanzfrequenz für $^{29}$Si 79,51 MHz). Die Messungen erfolgten bei Raumtemperatur. Die $^{29}$Si-chemischen Verschiebungen wurden auf Tetramethylsilan (TMS) = 0 ppm unter Verwendung von Oktakis(trimethylsiloxy)silsesquioxan ($Q_8M_8$, die am stärksten abgeschirmte $Q^4$-Gruppe liegt bei -109 ppm bezogen auf TMS) als externem Referenzstandard referenziert.

Die in Tabelle 1 angegebenen relativen Verhältnisse der D- und M-Signale (eine Zuordnung der Signale zu D bzw. M-Gruppen findet sich beispielsweise in G. Engelhardt et al. Polymer Bulletin, 1981, 5, 557ff) wurde aus den durch Deconvolution erhaltenen Signalintensitäten entsprechend folgender Formel berechnet:

$$D/M(^{29}Si\text{-}SP/MAS) = \frac{Int(D)}{Int(M)}$$

mit

>$Int$(D): Intensität des Signals der D-Gruppen
>$Int$(M): Intensität des Signals der T2-Gruppe

Die ausgewählten Proben wurden darüber hinaus mittels $^{29}$Si-CP/MAS-NMR-Spektroskopie untersucht, wobei CP für Kreuzpolarisation steht. Verwendet wurde ein NMR Spektrometer AVANCE 400 WB der Firma Bruker ausgestattet mit einem 7 mm Doppelresonanz MAS-Probenkopf (Feldstärke 9,4 Tesla; Resonanzfrequenz für $^{29}$Si 79,51 MHz und 400,23 MHz für $^1$H). Eine lineare Rampe von 80-100% wurde für die Protonen RF-Amplitude während der Kreuzpolarisation (CP) bei einer MAS Rotationsfrequenz von 5 kHz benutzt. Die Kontaktzeit betrug 5 ms. Bis zu 20000 Scans wurden mit einer Experimentwiederholzeit von 3 s aufgenommen (weitere Aufnahmeparameter: 90°Si-Puls = 5 $\mu$s, TD = 1662, SWH = 23809, o1= -5566 Hz, Entkopplung: TPPM15; Prozessierungsparameter: SI = 16384; Gaußmultiplikation mit LB = -5Hz und GB = 0,03). Alle Messungen erfolgten bei Raumtemperatur. Die $^{29}$Si chemischen Verschiebungen wurden auf Tetramethylsilan (TMS) = 0 ppm unter Verwendung von Oktakis(trimethylsiloxy)silsesquioxan ($Q_8M_8$, die am stärksten abgeschirmte $Q^4$-Gruppe liegt bei -109 ppm bezogen auf TMS) als externem Referenzstandard referenziert. In den erhaltenen Spektren waren die Resonanzen für die M-Gruppen praktisch nicht auszumachen.

## 5. Bestimmung des pH-Werts

Die Bestimmung erfolgte wie in DIN EN 787-9 beschrieben, wobei jedoch eine 4%-ige Dispersion der Probe in einem Wasser/Methanol-Gemisch des Volumenverhältnisses 1:1 eingesetzt wurde.

## Beispiele

### Beispiel KS1:

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurde unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 1,2 g Wasser und 2,4 g Methanol zugesetzt. Anschließend wurden auf analoge Weise 20 g Me$_3$Si(OSiMe$_2$)$_3$Cl zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wurde zunächst für eine Stunde unter kräftigem Rühren auf 80 °C und weitere zwei Stunden auf 200 °C erhitzt. Nach dem Abkühlen der Probe auf Raumtemperatur wurde diese analysiert.
Die experimentellen Daten und Analysedaten sind in Tabelle 1 zusammengefasst. Als Ergebnis der $^{29}$Si-SP/MAS-Messungen ist jeweils der Quotient D/M der Integrale der Signale für die Me$_2$Si (O$_{1/2}$)$_2$ (D) und Me$_3$SiO$_{1/2}$ (M) angegeben.

### Beispiel KS2:

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurde unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) 1,3 g Wasser zugesetzt. Anschließend wurden auf analoge Weise 24 g Siloxan I (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) zugefügt. Die Reaktionsmischung wurde zunächst für eine Stunde unter kräftigem Rühren auf 80 °C und weitere zwei Stunden auf 200 °C erhitzt.
Die Analyse der abgekühlten Probe erfolgte analog zu Beispiel KS1 und ist in Tabelle 1 aufgeführt.

### Beispiel KS3:

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurde unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 0,6 g Wasser und 1,2 g Methanol zugesetzt. Anschließend wurden auf analoge Weise 10 g Me$_3$Si(OSiMe$_2$)$_3$Cl (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) zugefügt. Die Reaktionsmischung wurde zunächst für eine Stunde unter kräftigem Rühren auf 80 °C und weitere zwei Stunden auf 200 °C erhitzt.
Die Analyse der abgekühlten Probe erfolgte analog zu Beispiel KS1 und ist in Tabelle 1 aufgeführt.

### Beispiel KS4:

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurde unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) eine Mischung bestehend aus 0,2 g Wasser und 0,5 g Methanol zugesetzt. Anschließend wurden auf analoge Weise 4 g $Me_3Si(OSiMe_2)_3Cl$ zugefügt (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff). Die Reaktionsmischung wurde zunächst für eine Stunde unter kräftigem Rühren auf 80 °C und weitere zwei Stunden auf 200 °C erhitzt.

Nach Abkühlung des Produktes auf 50 °C wurden 12 g Hexamethyldisilazan gefolgt von 2,7 g Wasser aufgedüst (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) und nochmals für eine Stunde auf 120 °C erhitzt.

Die Analyse der abgekühlten Probe erfolgte analog zu Beispiel KS1 und ist in Tabelle 1 aufgeführt.

**Beispiel KS5:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 22 g eines nach EP 1 883 666 hergestellten monofunktionellenen Permethylsiloxanols zugefügt, das durch die Formel $Me_3Si(OSiMe_2)_{23}OH$ wiedergegeben werden kann. Die Reaktionsmischung wurde für eine Stunde unter kräftigem Rühren auf 200 °C erhitzt.

Die Analyse der abgekühlten Probe erfolgte analog zu Beispiel KS1 und ist in Tabelle 1 aufgeführt.

**Beispiel KS6:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 22 g eines nach EP 1 883 666 hergestellten monofunktionellenen Permethylsiloxanols zugefügt, das durch die Formel $Me_3Si(OSiMe_2)_{23}OH$ wiedergegeben werden kann. Die Reaktionsmischung wurde für eine Stunde unter kräftigem Rühren auf 200 °C erhitzt.

Nach Abkühlung des Produktes auf 50 °C wurden 12 g Hexamethyldisilazan gefolgt von 2,7 g Wasser aufgedüst (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) und nochmals für eine Stunde auf 120 °C erhitzt.

Die Analyse der abgekühlten Probe erfolgte analog zu Beispiel KS1 und ist in Tabelle 1 aufgeführt.

**Beispiel KS7:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 13 g eines nach EP 1 883 666 hergestellten monofunktionellenen Permethylsiloxanols zugefügt, das durch die Formel $Me_3Si(OSiMe_2)_{14}OH$ wiedergegeben werden kann. Die Reaktionsmischung wurde für eine Stunde unter kräftigem Rühren auf 200 °C erhitzt.

Die Analyse der abgekühlten Probe erfolgte analog zu Beispiel KS1 und ist in Tabelle 1 aufgeführt.

**Beispiel KS8:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 25 g eines nach EP 1 883 666 hergestellten monofunktionellenen Permethylsiloxanols zugefügt, das durch die Formel $Me_3Si(OSiMe_2)_{14}OH$ wiedergegeben werden kann. Die Reaktionsmischung wurde für eine Stunde unter kräftigem Rühren auf 200 °C erhitzt.

Die Analyse der abgekühlten Probe erfolgte analog zu Beispiel KS1 und ist in Tabelle 1 aufgeführt.

**Beispiel KS9:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 38 g eines nach EP 1 883 666 hergestellten monofunktionellenen Permethylsiloxanols zugefügt, das durch die Formel Me$_3$Si(OSiMe$_2$)$_{14}$OH wiedergegeben werden kann. Die Reaktionsmischung wurde für eine Stunde unter kräftigem Rühren auf 200 °C erhitzt.

Die Analyse der abgekühlten Probe erfolgte analog zu Beispiel KS1 und ist in Tabelle 1 aufgeführt.

**Beispiel KS10:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) 4 g einer 25%igen wässrigen Lösung von Ammoniak zugesetzt. Anschließend wurden auf analoge Weise (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 38 g eines nach EP1883666 hergestellten monofunktionellenen Permethylsiloxanols zugefügt, das durch die Formel Me$_3$Si(OSiMe$_2$)$_{14}$OH wiedergegeben werden kann. Die Reaktionsmischung wurde für zwei Stunde unter kräftigem Rühren auf 100 °C erhitzt.

Die Analyse der abgekühlten Probe erfolgte analog zu Beispiel KS1 und ist in Tabelle 1 aufgeführt.

**Beispiel KS11:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) 1,6 g Triethylamin zugesetzt. Anschließend wurden auf analoge Weise (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 38 g eines nach EP 1 883 666 hergestellten monofunktionellenen Permethylsiloxanols zugefügt, das durch die Formel Me$_3$Si(OSiMe$_2$)$_{14}$OH wiedergegeben werden kann. Die Reaktionsmischung wurde für zwei Stunde unter kräftigem Rühren auf 100 °C erhitzt.

Die Analyse der abgekühlten Probe erfolgte analog zu Beispiel KS1 und ist in Tabelle 1 aufgeführt.

**Beispiel KS12:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) 1,2 g Butylamin zugesetzt. Anschließend wurden auf analoge Weise (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 38 g eines nach EP 1 883 666 hergestellten monofunktionellenen Permethylsiloxanols zugefügt, das durch die Formel Me$_3$Si(OSiMe$_2$)$_{14}$OH wiedergegeben werden kann. Die Reaktionsmischung wurde für zwei Stunde unter kräftigem Rühren auf 100 °C erhitzt.

Die Analyse der abgekühlten Probe erfolgte analog zu Beispiel KS1 und ist in Tabelle 1 aufgeführt.

**Beispiel KS13:**

Zu 120 g einer hydrophilen Kieselsäure, mit einer spezifischen Oberfläche von 200 m$^2$/g, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 25 g eines nach EP 1 883 666 hergestellten monofunktionellenen Permethylsiloxanols zugefügt, das durch die Formel Me$_3$Si(OSiMe$_2$)$_{14}$OH wiedergegeben werden kann. Die Reaktionsmischung wurde für eine Stunde unter kräftigem Rühren auf 200 °C erhitzt.
Die Analyse der abgekühlten Probe erfolgte analog zu Beispiel KS1 und ist in Tabelle 1 aufgeführt.

**Beispiel KS14:**

Zu 120 g einer hydrophilen Kieselsäure, mit einer spezifischen Oberfläche von 200 $m^2/g$, bestimmt nach der BET Methode entsprechend DIN 66131 und 66132 (erhältlich unter dem Namen HDK® N20 von Wacker Chemie AG, München, Deutschland), wurden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 25 g eines nach EP 1 883 666 hergestellten monofunktionellenen Permethylsiloxanols zugefügt, das durch die Formel $Me_3Si(OSiMe_2)_{14}OH$ wiedergegeben werden kann. Die Reaktionsmischung wurde für eine Stunde unter kräftigem Rühren auf 200 °C erhitzt.
Die Analyse der abgekühlten Probe erfolgte analog zu Beispiel KS1 und ist in Tabelle 1 aufgeführt.

**Beispiel KS15:**

Zu 120 g einer hydrophilen Kieselsäure, mit einer spezifischen Oberfläche von 200 $m^2/g$, bestimmt nach der BET Methode entsprechend DIN 66131 und 66132 (erhältlich unter dem Namen HDK® N20 von Wacker Chemie AG, München, Deutschland), werden unter Stickstoffatmosphäre durch Verdüsen über eine Zweistoffdüse (Hohlkegeldüse, Modell 121, der Firma Düsen-Schlick GmbH, D-96253 Untersiemau/ Coburg, 30° Sprühwinkel, 0,1 mm Bohrung, betrieben mit 5 bar Stickstoff) 1,2 g Butylamin zugesetzt. Anschließend werden auf analoge Weise (Hohlkegeldüse, Modell 121, der Firma Düsen-Schlick GmbH, D-96253 Untersiemau/ Coburg, 30° Sprühwinkel, 0,2 mm Bohrung, betrieben mit 5 bar Stickstoff) 38 g eines nach EP1883666 hergestellten monofunktionellenen Permethylsiloxanols zugefügt, das durch die Formel $Me_3Si(OSiMe_2)_{14}OH$ wiedergegeben werden kann. Die Reaktionsmischung wird für zwei Stunde unter kräftigem Rühren auf 100 °C erhitzt.
Die Analyse der abgekühlten Probe erfolgte analog zu Beispiel KS1 und ist in Tabelle 1 aufgeführt. Alle Ergebnisse sind in Tab. 1 aufgelistet.

**Tabelle 1:** Experimentelle und Analysedaten der Beispiele KS1 bis KS15

Siloxan I: $Me_3Si(OSiMe_2)_3Cl$; Siloxan II: $Me_3Si(OSiMe_2)_{23}OH$;

Siloxan III: $Me_3Si(OSiMe_2)_{14}OH$;

| | Belegmittel | Hilfsstoff | Nachbehandlung | Rest-Silanolgehalt [%] | Kohlenstoffgehalt [%] | Extrahierbare Bestandteile [%] | pH | D/M ($^{29}$Si-SP/MAS) |
|---|---|---|---|---|---|---|---|---|
| KS1 | Siloxan I | - | - | 38 | 3,3 | 2,3 | 4,2 | 3,2 |
| KS2 | Siloxan I | - | - | 66 | 3,7 | 5,5 | 4, 6 | - |
| KS3 | Siloxan I | - | - | 53 | 2,2 | 1,0 | 4,3 | - |
| KS4 | Siloxan I | - | $HN(SiMe_3)_2$ | 19 | 2,5 | 0,3 | 7,5 | - |
| KS5 | Siloxan II | - | - | 82 | 3,4 | 2,1 | 4,6 | 23,9 |
| KS6 | Siloxan II | - | $HN(SiMe_3)_2$ | 13 | 7,1 | 6,4 | 6,8 | - |
| KS7 | Siloxan III | - | - | 82 | 2,9 | 1,9 | 4,6 | - |
| KS8 | Siloxan III | - | - | 67 | 5,6 | 4,1 | 4,8 | - |
| KS9 | Siloxan III | - | - | 47 | 7,6 | 3,0 | 6,5 | 12,6 |
| KS10 | Siloxan III | $NH_3$ (aq) | - | 26 | 7,7 | 3,1 | 9,2 | 11,9 |
| KS11 | Siloxan III | $NEt_3$ | - | 32 | 8,3 | 3,4 | 10,0 | - |
| KS12 | Siloxan III | $BuNH_2$ | - | 22 | 8,1 | 3,1 | 10,1 | 14,8 |
| KS13 | Siloxan III | - | - | 61 | 5,3 | 3,6 | 5,0 | - |
| KS14 | Siloxan III | - | - | 60 | 5,5 | 3,8 | 7,1 | - |
| KS15 | Siloxan III | $BuNH_2$ | - | 20 | 8,2 | 2,8 | 10,3 | - |
| HDK® H18 | *) | *) | *) | 19 | 4,6 | 0,9 | 5,3 | - |
| HDK® H20 | *) | *) | *) | 43 | 1,1 | 0,1 | 4,1 | - |
| HDK® N20 | *) | *) | *) | 100 | **) | **) | 4,1 | - |

*) kommerzielle Produkte der Wacker Chemie AG **) nicht anwendbar - nicht angewandt

**Anwendungsbeispiele:**

**Beispiel 16:**

Jeweils 3 g der experimentellen Produkte KS1-KS12, sowie der kommerziellen Produkte HDK® H18, H20 und N20 wurden unter Umgebungsdruck in einem DISPERMAT® Vakuumdissolver der Firma VMA Getzmann GmbH (D-51580 Reichshof) ausgestattet mit einer 40 mm Dissolverscheibe innerhalb von 1 bis 2 min bei 750 Umin$^{-1}$ in 97 g Epikote RIM135 bezogen von Hexion Specialty Chemicals, Inc. (D-47138 Duisburg) eingearbeitet und anschließend 5 min bei 6000 Umin$^{-1}$ unter reduziertem Druck (0,3 bar) dispergiert. Die Viskosität der Dispersion wurde nach einer Stunde Ruhezeit bei Raumtemperatur mittels luftgelagertem Haake RheoStress 600 Rheometer mit Kegel-Platte-Geometrie (35 mm, 2°) bei 25 °C in Rotation gemessen. Zur Ermittlung der Viskosität wurde dabei ein Messprofil bestehend aus zwei Abschnitten eingesetzt, wobei zunächst 120 s bei 1s$^{-1}$ und anschließend weitere 120 s bei 10s$^{-1}$ geschert wurde. Die in Tabelle 2 angegebene Viskosität wurde als Mittelwert aus den letzten 10 Datenpunkten des zweiten Abschnitts ermittelt. Alle Ergebnisse sind in Tab. 2 aufgeführt.

**Tabelle 2:** Experimentelle und Analysedaten von Beispiel 16 *) kommerzielle Produkte der Wacker Chemie AG - nicht angewandt

| Siloxan I: $Me_3Si(OSiMe_2)_3Cl$ <br> Siloxan II: $Me_3Si(OSiMe_2)_{23}OH$ <br> Siloxan III: $Me_3Si(OSiMe_2)_{14}OH;$ | | | | |
|---|---|---|---|---|
| **Ausgangsprodukt** | | | | **Viskosität (Pa*s)** |
| **Name** | **Belegmittel** | **Hilfsstoff** | **Nachbehandlung** | |
| **KS1** | Siloxan I | - | - | 5,8 |
| **KS2** | Siloxan I | - | - | 2,7 |
| **KS3** | Siloxan I | - | - | 3,5 |
| **KS4** | Siloxan I | - | $HN(SiMe_3)_2$ | 4,6 |
| **KS5** | Siloxan II | - | - | 5,4 |
| **KS6** | Siloxan II | - | $HN(SiMe_3)_2$ | 7,9 |
| **KS7** | Siloxan | - | - | 5,6 |
| **KS8** | Siloxan | - | - | 11,3 |
| **KS9** | Siloxan | - | - | 11,4 |
| **KS10** | Siloxan III | $NH_3(aq)$ | - | 7,7 |
| **KS11** | Siloxan III | $NEt_3$ | - | 8,3 |
| **KS12** | Siloxan III | $BuNH_2$ | - | 10,9 |
| **HDK® H18** | *) | *) | *) | 7,6 |
| **HDK® H20** | *) | *) | *) | 2,7 |

**Beispiel 17:**

Jeweils 40 g der Produkte aus den Beispielen KS7 bis KS13, sowie der kommerziellen Produkte HDK® H18, H20 und N20 wurden unter Umgebungsdruck in einem Planetendissolver Typ Labotop 1 der Firma PC Laborsystem GmbH (CH-4312 Magden) ausgestattet mit einer 65 mm Dissolverscheibe, Knethaken CONI 1 (Balkenlänge = 20 mm) und einem Abstreifer Typ CONI 1 mit PT100 und PTFE Blatt bei 250 Umin$^{-1}$ in 460 g Epikote 828 bezogen von Overlack AG (D-41061 Mönchengladbach) via Combi GmbH (D-41061 Mönchengladbach) eingearbeitet. Die Zeit bis zur vollständigen Benetzung der jeweiligen Kieselsäure ist in Tabelle 3 als Einarbeitungszeit angegeben. Nach erfolgter Einarbeitung wurde 5 min bzw. 30 min unter reduziertem Druck (ca. 50 mbar) und Wasserkühlung dispergiert (Dissolverscheibe: 5000 Umin$^{-1}$ Knethaken: 600 Umin$^{-1}$).

Die Viskosität der Dispersion wurde nach einem bzw. sieben Tagen Ruhezeit mittels luftgelagertem Haake RheoStress 600 Rheometer mit Kegel-Platte-Geometrie (35 mm, 2°) bei 25 °C in Rotation (300 s bei 0,1 s$^{-1}$) gemessen.

Die nach einer Messzeit von 300 s ermittelte Viskosität ist in Tabelle 3 angegeben. Alle Ergebnisse sind in Tab. 3 aufgeführt.

**Tabelle 3:** Experimentelle und Analysedaten von Beispiel 17

| Siloxan III: $Me_3Si(OSiMe_2)_{14}OH$; | | | | | |
|---|---|---|---|---|---|
| **Ausgangsprodukt** | | | **Einarbeitungszeit [s]** | **Viskosität nach 1d (Pa*s)** | **Viskosität nach 7d (Pa*s)** |
| **Name** | **Belegmittel** | **Hilfsstoff** | | | |
| **KS7** | Siloxan III | - | 110 | 2660 | 2820 |
| **KS8** | Siloxan III | - | 100 | 6960 | 6830 |
| **KS9** | Siloxan III | - | 85 | 8560 | 8430 |
| **KS10** | Siloxan III | $NH_3$(aq) | 90 | 5620 | 5590 |
| **KS11** | Siloxan III | $NEt_3$ | 95 | 6020 | 5520 |
| **KS12** | Siloxan III | $BuNH_2$ | 120 | 5700 | 5570 |
| **KS13** | Siloxan III | - | 100 | 6830 | 6650 |
| **HDK® H18** | *) | *) | 600 | 5490 | 5750 |
| **HDK® H20** | *) | *) | 240 | 215 | 202 |
| **HDK® N20** | *) | *) | 110 | 55 | 51 |
| *) kommerzielle Produkte der Wacker Chemie AG<br>- nicht angewandt | | | | | |

**Beispiel 18:**

Unter Umgebungsdruck wurden in einem Dissolver DISPERMAT® CA40C der Firma VMA-Getzmann GmbH (D-51580 Reichshof) ausgestattet mit einer 40 mm Dissolverscheibe bei 1000 Umin$^{-1}$ 288 g Epikure RIMH 137 bezogen von Momentive Specialty Chemicals Stuttgart GmbH (D-73730 Esslingen) vorgelegt und 12 g der Produkte aus den Beispielen KS7 bis KS13, sowie der kommerziellen Produkte HDK® H18, H20 und N20 kontinuierlich zudosiert. Nach erfolgter Einarbeitung wurde 30 min unter reduziertem Druck (ca. 50 mbar) und Wasserkühlung dispergiert (4774 Umin$^{-1}$).
Die Viskosität der Dispersion wurd nach einem bzw. sieben Tagen Ruhezeit mittels luftgelagertem Haake RheoStress 600 Rheometer mit Kegel-Platte-Geometrie (35 mm, 2°) bei 25 °C in Rotation (0,1 s$^{-1}$)gemessen. Die nach einer Messzeit von 300 s ermittelte Viskosität ist in Tabelle 4 angegeben. Alle Ergebnisse sind in Tab. 4 aufgeführt.

**Tabelle 4:** Experimentelle und Analysedaten von Beispiel 18

| Siloxan III: $Me_3Si(OSiMe_2)_{14}OH$; | | | | |
|---|---|---|---|---|
| **Ausgangsprodukt** | | | **Viskosität** | **Viskosität** |
| **Name** | **Belegmittel** | **Hilfsstoff** | **nach 1d (Pa*s)** | **nach 7d (Pa*s)** |
| **KS7** | Siloxan III | - | 0,31 | 0,13 |
| **KS8** | Siloxan III | - | 9,77 | 0,72 |
| **KS9** | Siloxan III | - | 44,8 | 1,33 |
| **KS10** | Siloxan III | $NH_3$(aq) | 17,4 | 6,31 |
| **KS11** | Siloxan III | $NEt_3$ | 38,9 | 33,6 |
| **KS12** | Siloxan III | $BuNH_2$ | 23,7 | 10,2 |
| **KS13** | Siloxan III | - | 2,45 | 0,53 |
| **HDK® H18** | *) | *) | 1,33 | 1, 05 |

(fortgesetzt)

| Siloxan III: Me$_3$Si(OSiMe$_2$)$_{14}$OH; | | | | |
|---|---|---|---|---|
| **Ausgangsprodukt** | | | **Viskosität** | **Viskosität** |
| **Name** | **Belegmittel** | **Hilfsstoff** | **nach 1d (Pa*s)** | **nach 7d (Pa*s)** |
| **HDK® N20** | *) | *) | 0,26 | 0,27 |
| *) kommerzielle Produkte der Wacker Chemie AG<br>- nicht angewandt | | | | |

**Beispiel 19:**

Um die verstärkende Wirkung des Füllstoffs zu ermitteln, wurden aus ausgewählten Dispersionen der Beispiele 17 und 18 nach 7 d Ruhezeit Prüfkörper hergestellt. Hierzu wurden die jeweiligen Dispersionen eines Kieselsäuretyps in Epikote 828 bzw. Epikure RIMH 137 im Verhältnis 40:11 homogen durchmischt und in eine Silikongussform gefüllt, die dem Prüfkörpertyp 1B nach DIN EN ISO 527-2 nachempfunden war. Die Dicke h der Prüfkörper betrug in Abweichung der genannten Norm DIN EN ISO 527-2 7 mm. Nach Aushärtung der Prüfkörper bei Raumtemperatur an der Luftwerden die in Tabelle 4 aufgeführten Zugeigenschaften nach DIN EN ISO 527 bestimmt. Alle Ergebnisse sind in Tab. 5 aufgeführt.

**Tabelle 5:** Experimentelle und Analysedaten von Beispiel 19 Siloxan III: Me$_3$Si(OSiMe$_2$)$_{14}$OH; *) kommerzielle Produkte der Wacker Chemie AG - nicht angewandt

| **Ausgangsprodukt** | | | **Bruchspannung $\sigma_b$ [MPa]** | **Zugdehnung $\varepsilon$ [%]** |
|---|---|---|---|---|
| **Name** | **Beleg**mittel | **Hilfsstoff** | | |
| **KS12** | Siloxan III | BuNH$_2$ | 2,4 | 0,06 |
| **KS13** | Siloxan III | - | 2,5 | 0,07 |
| **HDK® H18** | *) | *) | 1,6 | 0,03 |

**Beispiel 20:**

Zur Herstellung einer Dichtstoffformulierung wurden 25 g Geniosil® STP-E10 (erhältlich bei Wacker Chemie AG, München, Deutschland) in einem Laborplanetenmischer der Fa. PC-Laborsystem, ausgestattet mit zwei Balkenmischern, bei ca. 25 °C mit 24,7 g Polypropylenoxid (käuflich erhältlich unter der Bezeichnung Acclaim 2200 bei der Bayer Material Science AG, Leverkusen) und 1,5 g Vinyltrimethoxysilan (erhältlich als Geniosil® XL 10 bei Wacker Chemie AG, München, Deutschland) zwei Minuten bei 600 U/min homogenisiert.

Danach wurden 43,3 g eines mit Stearinsäure beschichteten Marmormehls mit einem mittleren Teilchendruchmesser (D50%) von ca. 2,0 mm (käuflich erhältlich unter der Bezeichung Omyabond 520 bei der Firma Omya GmbH, Köln, Deutschland) und 4 g der entsprechenden Kieselsäure (KS15, KS16 bzw. HDK® H18, kommerziell erhältlich von Wacker Chemie AG, München, Deutschland) zugegeben und zwei Minuten unter Rühren bei 600 U/min aufgeschlossen. Schließlich wurden 1 g 3-Aminopropyltrimethoxysilan(erhältlich als Geniosil® GF 96 bei Wacker Chemie AG, München, Deutschland) und 0,5 g Tinuvin B75 (BASF Schweiz AG, 4057 Basel) bei 200 U/min für eine Minute eingemischt und eine weitere Minute bei 200 U/min im Teilvakuum (ca. 100 mbar) homogenisiert und blasenfrei gerührt. Die so erhaltene Masse wurde in 310 ml PE-Kartuschen abgefüllt und vor der mechanischen Prüfung und rheologischen Untersuchung nach DIN 54458 24 h bei 20 °C gelagert. Zur Untersuchung der Langzeit-Lagerstabilität wurden die Kartuschen 28 d bei 70 °C und 24 h bei 20 °C gelagert. Alle Ergebnisse sind in Tab. 6.1 und 6.2 aufgeführt.

**Tabelle 6.1:** Experimentelle und Analysedaten von Beispiel 20

| Siloxan III: Me$_3$Si(OSiMe$_2$)$_{14}$OH; | | | |
|---|---|---|---|
| **Ausgangsprodukt** | **KS14** | **KS15** | **HDK® H18** |
| **Belegmittel** | Siloxan III | Siloxan III | *) |
| **Hilfsstoff** | - | BuNH$_2$ | *) |
| **Reißdehnung [%]** | 446 | 432 | 455 |

(fortgesetzt)

| Siloxan III: Me$_3$Si(OSiMe$_2$)$_{14}$OH; | | | |
|---|---|---|---|
| **Ausgangsprodukt** | **KS14** | **KS15** | **HDK® H18** |
| **Reißfestigkeit nach DIN 53504-85 [N/mm$^2$]** | 1,6 | 1,6 | 1,9 |
| **Shore Härte nach DIN 53505-A-87 [Shore A]** | 33 | 33 | 35 |
| *) kommerzielle Produkte der Wacker Chemie AG<br>- nicht angewandt | | | |

**Tabelle 6.2:** Experimentelle und Analysedaten von Beispiel 20

| Siloxan III: Me$_3$Si(OSiMe$_2$)$_{14}$OH; | | | | | | |
|---|---|---|---|---|---|---|
| **Ausgangsprodukt** | **KS14** | | **KS15** | | **HDK® H18** | |
| **Lagerzeit bei 70°C [d]** | 0 | 28 | 0 | 28 | 0 | 28 |
| **Hautbildungszeit [min]** | 80 | 160 | 50 | 135 | 57 | 140 |
| **Speichermodul bei 0,1% Deformation [kPa]** | 31,5 | 19,6 | 34,7 | 27,1 | 37,2 | 44,2 |
| **komplexe Viskosität bei 0,1% De**formation [Pa*s] | 563 | 373 | 595 | 486 | 662 | 768 |
| **Schubspannung [Pa]** | 236 | 154 | 319 | 221 | 293 | 623 |
| **komplexeViskosität bei 100% De**formation [Pa*s] | 49,7 | 50,4 | 42,3 | 44,3 | 62,1 | 66,9 |
| *) kommerzielle Produkte der Wacker Chemie AG<br>- nicht angewandt | | | | | | |

**Patentansprüche**

1. Metalloxide, die Gruppen der allgemeinen Formel R$^1$R$^2$R$^3$SiO$_{1/2}$ (M) und R$^4$R$^5$Si(O$_{1/2}$)$_2$ (D) aufweisen, wobei R$^1$, R$^2$, R$^3$, R$^4$ und R$^5$ jeweils ein einwertiger Kohlenwasserstoffrest mit 1 bis 24 C-Atomen ist und R$^1$, R$^2$, R$^3$, R$^4$ und R$^5$ gleich oder verschieden sein können, wobei

    a) der Rest-Silanolgehalt 30-90% beträgt oder
    b) der Rest-Silanolgehalt 10-40% beträgt

und für den Kohlenstoffgehalt gilt: %C $\geq$ A + B · %SiOH, wobei A = 9 und B = -0,15 ist und die Werte %C, A und %SiOH in Prozent angegeben sind.

2. Metalloxide nach Anspruch 1 , **dadurch gekennzeichnet, dass** es sich beim Metalloxid um Kieselsäure handelt.

3. Metalloxide nach einem der Ansprüche 1 bis 2, **dadurch gekennzeichnet, dass** der extrahierbare Anteil höchstens 6 Gew.% beträgt.

4. Metalloxide nach einem der Ansprüche 1 bis 3, **dadurch gekennzeichnet, dass** die relativen Intensitäten der Signale ermittelt durch Integration der Signale aus der Festkörper-Kernresonanzspektroskopie ($^{29}$Si-SP/MAS-NMR) für D-Gruppen im Verhältnis zu M-Gruppen im Bereich von 1 bis 50 liegen.

5. Metalloxide nach einem der Ansprüche 1 bis 4, **dadurch gekennzeichnet, dass** die im Doppelresonanzexperiment $^{29}$Si-CP/MAS-NMR erhaltenen Spektren ein relatives D/M-Verhältnis von >3 aufweisen.

6. Verfahren zur Herstellung von Metalloxiden gemäß einem der Ansprüche 1 bis 5, **dadurch gekennzeichnet, dass** die Metalloxide mit monofunktionellen Siloxanen der allgemeinen Formel R$^1$R$^2$R$^3$Si(OSiR$^4$R$^5$)$_m$X behandelt werden, wobei X eine reaktive Gruppe ist; R$^1$, R$^2$, R$^3$, R$^4$ und R$^5$ jeweils ein einwertiger Kohlenwasserstoffrest mit 1 bis 24 C-Atomen und m = 0 bis 50 ist und R$^1$, R$^2$, R$^3$, R$^4$ und R$^5$ gleich oder verschieden sein können, wobei

a) die Modifizierung in Abwesenheit eines Hilfsstoffs bei einer Temperatur von 150 bis 230 °C erfolgt oder
b) die Modifizierung in Anwesenheit eines Hilfsstoffs, welcher die notwendigen Reaktionszeiten herabsetzt und/oder es ermöglicht die Prozesstemperaturen zu reduzieren, bei einer Temperatur von 80 bis 120 °C erfolgt.

7. Verfahren nach Anspruch 6 , **dadurch gekennzeichnet, dass** die Reaktion (Schritt 2) in der Gasphase erfolgt.

8. Verfahren nach einem der Ansprüche 6 oder 7, **dadurch gekennzeichnet, dass** die Reaktion (Schritt 2) bei Temperaturen von 30 °C bis 350 °C erfolgt.

9. Verwendung der Metalloxide nach einem der Ansprüche 1 bis 5 zur Steuerung der Fließeigenschaften von Kleb-, Dicht- und Beschichtungsstoffen, zur Verbesserung der mechanischen Eigenschaften von Elastomeren oder zur Steuerung der Ladungs- und Fließeigenschaften von Pulvern wie Tonern oder Pulverlacken.

## Claims

1. Metal oxide which has groups of the general formulae $R^1R^2R^3SiO_{1/2}$ (M) and $R^4R^5Si(O_{1/2})_2$ (D), where $R^1$, $R^2$, $R^3$, $R^4$ and $R^5$ is in each case a monovalent hydrocarbon radical having 1 to 24 carbon atoms, and $R^1$, $R^2$, $R^3$, $R^4$ and $R^5$ can be identical or different, where

   a) the residual silanol content is 30-90% or
   b) the residual silanol content is 10-40% and the following is applicable for the carbon content: $\%C \geq A + B \cdot \%SiOH$, where $A = 9$ and $B = -0.015$ and the values %C, A and %SiOH are given in percent.

2. Metal oxide according to Claim 1, **characterized in that** the metal oxide is silica.

3. Metal oxide according to either of Claims 1 and 2, **characterized in that** the extractable fraction is at most 6% by weight.

4. Metal oxide according to any one of Claims 1 to 3, **characterized in that** the relative intensities of the signals ascertained by integration of the signals from the solid-state nuclear magnetic resonance spectroscopy ($^{29}$Si-SP/MAS-NMR) for D groups relative to M groups are in the range from 1 to 50.

5. Metal oxide according to any one of Claims 1 to 4, **characterized in that** the spectra obtained in the double resonance experiment $^{29}$Si-CP/MAS-NMR have a relative D/M ratio of > 3.

6. Method for preparing metal oxides according to any one of Claims 1 to 5, **characterized in that** the metal oxides are treated with monofunctional siloxanes of the general formula $R^1R^2R^3Si(OSiR^4R^5)_mX$, where X is a reactive group; $R^1$, $R^2$, $R^3$, $R^4$ and $R^5$ is in each case a monovalent hydrocarbon radical having 1 to 24 carbon atoms and $m = 0$ to 50, and $R^1$, $R^2$, $R^3$, $R^4$ and $R^5$ can be identical or different, where

   a) the modification takes place in the absence of an auxiliary at a temperature of 150 to 230°C or
   b) the modification takes place in the presence of auxiliary, which reduces the necessary reaction times and/or makes it possible to reduce the process temperatures, at a temperature of 80 to 120°C.

7. Method according to Claim 6, **characterized in that** the reaction (step 2) takes place in the gas phase.

8. Method according to either of Claims 6 or 7, **characterized in that** the reaction (step 2) takes place at temperatures of 30°C to 350°C.

9. Use of the metal oxide according to any one of Claims 1 to 5 for controlling the flow properties of adhesives, sealants and coating materials for improving the mechanical properties of elastomers or for controlling the charge and flow properties of powder such as toners or powder coatings.

## Revendications

1. Oxydes métalliques, qui comprennent des groupes des formules générales $R^1R^2R^3SiO_{1/2}$ (M) et $R^4R^5Si(O_{1/2})_2$ (D),

dans lesquelles $R^1$, $R^2$, $R^3$, $R^4$ et $R^5$ représentent chacun un radical hydrocarboné monovalent de 1 à 24 atomes C, et $R^1$, $R^2$, $R^3$, $R^4$ et $R^5$ peuvent être identiques ou différents,

> a) la teneur en silanol résiduelle étant de 30 à 90 % ou
> b) la teneur en silanol résiduelle étant de 10 à 40 %, avec, pour la teneur en carbone : $\%C \geq A + B \cdot \%SiOH$, avec A = 9 et B = -0,15 et les valeurs %C, A et %SiOH étant données en pourcentages.

2. Oxydes métalliques selon la revendication 1, **caractérisés en ce que** l'oxyde métallique est la silice.

3. Oxydes métalliques selon l'une quelconque des revendications 1 à 2, **caractérisés en ce que** la fraction extractible est d'au plus 6 % en poids.

4. Oxydes métalliques selon l'une quelconque des revendications 1 à 3, **caractérisés en ce que** les intensités relatives des signaux calculées par intégration des signaux de spectroscopie de résonance nucléaire des solides ($^{29}$Si-SP/MAS-RMN) pour les groupes D par rapport aux groupes M se situent dans la plage allant de 1 à 50.

5. Oxydes métalliques selon l'une quelconque des revendications 1 à 4, **caractérisés en ce que** les spectres obtenus dans l'expérience de résonance double $^{29}$Si-CP/MAS-RMN présentent un rapport D/M relatif > 3.

6. Procédé de fabrication d'oxydes métalliques selon l'une quelconque des revendications 1 à 5, **caractérisé en ce que** les oxydes métalliques sont traités avec des siloxanes monofonctionnels de formule générale $R^1R^2R^3Si(OSiR^4R^5)_mX$,
X étant un groupe réactif ; $R^1$, $R^2$, $R^3$, $R^4$ et $R^5$ représentant chacun un radical hydrocarboné monovalent de 1 à 24 atomes C et m = 0 à 50, et $R^1$, $R^2$, $R^3$, $R^4$ et $R^5$ pouvant être identiques ou différents,

> a) la modification ayant lieu en l'absence d'un adjuvant à une température de 150 à 230 °C ou
> b) la modification ayant lieu en la présence d'un adjuvant, qui réduit les durées de réaction nécessaires et/ou qui permet de réduire les températures de procédé, à une température de 80 à 120 °C.

7. Procédé selon la revendication 6, **caractérisé en ce que** la réaction (étape 2) a lieu dans la phase gazeuse.

8. Procédé selon l'une quelconque des revendications 6 ou 7, **caractérisé en ce que** la réaction (étape 2) a lieu à des températures de 30 °C à 350 °C.

9. Utilisation des oxydes métalliques selon l'une quelconque des revendications 1 à 5 pour l'ajustement des propriétés d'écoulement de matériaux adhésifs, d'étanchéité et de revêtement, pour l'amélioration des propriétés mécaniques d'élastomères ou pour l'ajustement des propriétés de charge et d'écoulement de poudres telles que des toners ou des vernis en poudre.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1163784
- DE 1916360
- EP 0686676 A
- US 5013585 A
- WO 2013024137 A1
- DE 102004055585 A1
- EP 1304361 A1
- EP 1883666 A
- EP 1845136 A

**In der Beschreibung aufgeführte Nicht-Patentliteratur**

- **G.W. SEARS et al.** *Analytical Chemistry,* 1956, vol. 28, 1981ff
- **G. ENGELHARDT et al.** *Polymer Bulletin,* 1981, vol. 5, 557ff